(19) **Europäisches Patentamt / European Patent Office / Office européen des brevets**

(11) **EP 4 703 757 A1**

(12) **EUROPEAN PATENT APPLICATION**

(43) Date of publication:
**04.03.2026 Bulletin 2026/10**

(21) Application number: **25187872.4**

(22) Date of filing: **07.07.2025**

(51) International Patent Classification (IPC):
**G01S 7/00** (2006.01)   **G01S 7/02** (2006.01)
**G01S 7/292** (2006.01)   **G01S 13/10** (2006.01)
**H04W 4/02** (2018.01)

(52) Cooperative Patent Classification (CPC):
**G01S 7/006; G01S 7/0234; G01S 7/2921;
G01S 13/106; H04W 4/023; H04W 4/026;
H04W 4/027; H04W 4/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.08.2024  US 202418817286**

(71) Applicant: **INTEL Corporation
Santa Clara, CA 95054 (US)**

(72) Inventors:
• **MERWADAY, Arvind
  San Jose, 95110 (US)**
• **VANNITHAMBY, Rath
  Portland, 97229 (US)**
• **HEWAVITHANA, Thushara
  Chandler (US)**
• **HAMIDI-SEPEHR, Fatemeh
  San Jose, 95117 (US)**

(74) Representative: **Viering, Jentschura & Partner
mbB
Patent- und Rechtsanwälte
Am Brauhaus 8
01099 Dresden (DE)**

(54) **METHODS AND DEVICES FOR RADIO INTERFERENCE ON SENSING SIGNALS**

(57)   An apparatus of a communication device, the apparatus may include: an interface configured to transmit a sensing signal and receive a reflected sensing signal; and a processor configured to: determine a sensing signal configuration of a further communication device; estimate a sensing interference of the further communication device based on the sensing signal configuration; and perform an interference cancellation on the reflected sensing signal using the sensing interference.

FIG. 12

## Description

### Technical Field

This disclosure generally relates to methods and devices for mitigating the impact of radio interference on sensing signals.

### Background

In radio communication networks in accordance with many radio communication technologies, such as Fourth Generation (LTE) and Fifth Generation (5G) New Radio (NR), various methods are employed to provide wireless data transfer with desired efficiency, speed, and reliability. One of these methods involves MIMO (Multiple Input Multiple Output) communication which is a wireless technology that leverages multiple antennas at both transmitter and receiver entities to enhance data transfer efficiency, capacity, and reliability. By using spatial diversity, MIMO systems may allow simultaneous transmission of multiple data streams over the same frequency band, which may result in an increase of data throughput per communication resource. MIMO communication may include techniques like beamforming and spatial multiplexing to take advantage of the diverse propagation paths in the radio environment to improve signal quality, and to mitigate fading effects and interference.

In addition to communication capabilities, modern radio networks are incorporating sensing functionalities to enable a wide range of applications and services. Sensing, in a broad extent, may include the ability to detect, locate, and track objects or certain designated conditions or circumstances in the surrounding environment. Various techniques may be employed for sensing, such as radar, lidar, and imaging sensors. For example, radar systems may utilize electromagnetic waves to detect and track targets by analyzing the reflected signals to provide information about the range, velocity, and angle of detected objects, and may be used for environmental monitoring. Recently, the concept of Joint Communications and Sensing (JCAS) systems has emerged as a promising solution for future radio networks to in accordance with the potential of both communication and sensing capabilities within a unified platform.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIGs. 1 and 2 depict a general network and device architecture for wireless communications and/or sensing operations;
FIG. 2 shows an exemplary internal configuration of a communication device;
FIG. 3 shows an example of an apparatus in accordance with various aspects described herein;
FIG. 4 shows an illustrative example of a sensing operation in accordance with various aspects described herein;
FIGs. 5A-5B shows illustrative examples of two dimensional and one-dimensional periodograms respectively, and FIG. 5C shows an example graph of misdetection probability as a function of target distance with respect to the periodograms depicted in FIGs. 5A and 5B.
FIG. 6 shows an illustrative example of a radio communication network in accordance with various aspects described herein;
FIG. 7 shows an illustrative example of another interference mitigation technique according to various aspects provided herein;
FIG. 8 shows an illustrative example of another interference mitigation technique according to various aspects provided herein;
FIG. 9 shows an illustrative example of another interference mitigation technique according to various aspects provided herein;
FIG. 10 shows an example of a graph associated with a degradation of the detection performance;
FIG. 11 shows an example of a graph associated with a degradation of the detection performance;
FIG. 12 shows an example of a method.

### Description

The following detailed description refers to the accompanying drawings that show, by way of illustration, exemplary details and aspects in which aspects of the present disclosure may be practiced.

Traditional radio communication systems, especially cellular systems such as LTE and 5G NR, are designed mainly for wireless data transfer and communication purposes. Such systems may employ various techniques to enhance data throughput, reliability, and spectral efficiency, including MIMO, beamforming, and spatial multiplexing. Through the use of MIMO technologies, multiple antennas at the transmitter and receiver may provide spatial diversity and simultaneous transmission of multiple data streams using the same frequency band. Additionally, beamforming may focus the signal energy towards the intended receiver for the purpose of improving signal quality and mitigating interference. Furthermore, spatial multiplexing may employ the use of diverse propagation paths within the radio environment to transmit multiple data streams concurrently, to increase the overall capacity.

Sensing in the context of JCAS may provide the ability to detect, locate, and track objects or designated conditions or circumstances (i.e. phenomena) in the environment surrounding the sensing entity using techniques like radar, lidar, and imaging sensors. In this constellation, radar systems may utilize electromagnetic waves to detect and track targets by analyzing reflected signals (e.g. reflected sensing signals), to obtain information about the range, velocity, and angle of detected objects. Lidar (Light Detection and Ranging) systems may use laser beams to obtain high-resolution 3D maps of the surroundings. Imaging sensors, such as cameras, may capture visual information about the environment for the purpose of enabling object recognition and classification.

JCAS systems are considered as a technology that intends to integrate communication and sensing capabilities within a single platform or network infrastructure. JCAS systems may leverage the existing communication hardware and resources to enable sensing functionalities to provide new services and applications. In some aspects, through enabled sensing functionalities, the JCAS systems may also optimize resource utilization compared to traditional radio communication systems. Illustratively, JCAS systems may be employed using the same hardware and spectrum resources for both communication and sensing tasks, which may result in improved efficiency and reduced costs compared to deploying separate systems. At the moment, JCAS systems are expected to be one of the main components of future cellular networks (e.g. 6G networks), enabling a wide range of use cases and applications. JCAS systems may differ from traditional communication systems through the incorporation of sensing capabilities in addition to communication functions. Traditional systems are generally focused on data transfer, while JCAS systems can simultaneously perform sensing tasks like target detection, parameter estimation, and environmental mapping using the same hardware and spectrum resources.

Correspondingly, communication devices of the radio network according to a JCAS technology, which the communication devices may include, illustratively, base stations (BSs), user equipments (UEs), and other network infrastructure components of the radio network may transmit and receive communication signals while also performing sensing operations to detect sensing targets or objects. The sensing targets or objects may include certain entities for which the sensing tasks are designated, such as vehicles, obstacles, pedestrians, or phenomena, such as environmental features, weather events, etc.

Radar sensing is one of the key features expected to be implemented in the next generations of wireless systems. Radar sensing may allow the communication device to use communication infrastructure and air interface components to also perceive the environment. Enabling efficient use of the radio spectrum to meet various communication and sensing use case requirements is one of the main goals in such systems. Providing comprehensive sensing coverage across JCAS network is an important aspect of such systems. A JCAS system can be seen as a network of sensors (e.g., BSs) distributed over an intended coverage area. Each BS may cover an area surrounding that BS, of which the range in a given direction may increase or decrease depending on beamforming and how wide transmit (TX) beams are.

In accordance with various aspects described herein, a sensing operation may include transmitting a sensing signal and analyzing the reflected sensing signal to detect and characterize objects in the environment. A sensing device, such as a BS or a UE, may generate and transmit a sensing signal, which may also be referred to as a sensing waveform or probe signal. The sensing signal may be configured to have specific features and characteristics to make the sensing signal suitable for sensing tasks. For example, the sensing signal may have better auto-correlation properties (e.g. better than communication signals), which may facilitate accurate distance and velocity estimation. Such properties may further provide the sensing signal to be in low cross-correlation with other signals expected within the environment to minimize interference.

The transmitted sensing signal may propagate through the environment and may interact with objects in its path. When the transmit signal hits an object, a portion of the signal's energy may be reflected back towards the sensing device, which may be referred to as a reflected sensing signal. The reflected sensing signal, which may also be referred to as the echo signal, may carry information about the presence, location, identity, velocity, and/or other characteristics of the object that has reflected the signal. The sensing device may receive the reflected sensing signal and processes the received reflected sensing signal to determine desired information associated with the object, illustratively, the presence, location, identity, velocity and/or other characteristics of the object.

The sensing device may apply various signal processing techniques to obtain information about the detected object. The signal processing techniques implemented by the sensing device may depend on the specific application and the type of sensing being performed, such as range estimation, velocity estimation, or imaging. In various techniques, the configuration of the sensing signal plays a crucial role in determining the sensing performance. The configuration of the sensing signal, which may be referred to as sensing signal configuration, used by the sensing device, may include various parameters of the sensing signal, such as its frequency, bandwidth, power, and waveform shape, used to generate and/or transmit the sensing signal.

Illustratively, the sensing device may optimize the sensing signal configuration to achieve the desired sensing accuracy, resolution, and range. For example, the sensing device may configure the sensing signal at higher frequencies and wider bandwidths, which may improve the range resolution, while increasing the signal power can extend the sensing range. Moreover, the sensing device may adapt the sensing signal configuration to the specific environment and the targets of interest. For instance, in cluttered environments with many reflective objects, using waveforms with good clutter suppression properties may enhance the detection of the desired targets.

In a sensing operation, interference can significantly impact the performance and accuracy. Interference may refer to unwanted signals that interfere with the transmitted sensing signal and/or reflected sensing signal, which may affect the accurate detection and characterization of objects in the environment. For example, a source of interference in JCAS systems may be the communication signals themselves. Since JCAS may integrate communication and sensing functions into a single system, the communication signals can interfere with the sensing signals, especially if they occupy the same or adjacent frequency bands. Such an interference may be referred to as self-interference or co-channel interference.

Another potential cause of interference may include the presence of other JCAS systems, such as other sensing devices or external radio sources in the environment. Such devices or radio sources may transmit their own sensing signals or communication signals, which can interfere with the sensing operation of the system of interest, in particular when they overlap within the same time and frequency resources. Such an interference may be referred to as external interference or inter-system interference.

Overall, interference can degrade the quality of the received reflected sensing signal, which may result in reduced sensing accuracy, resolution, and range. The interference may also increase the false alarm rate and degrade the overall sensing performance. In traditional radio communication systems, various techniques are commonly used to mitigate the impact of interference on the received communication signals. These techniques include interference cancellation, beamforming, and resource allocation methods that aim to transform the received signal to minimize the interference. However, in the context of JCAS, the application of interference-reducing transformations to the received sensing signals is not as widely adopted. This is because the sensing operation may be considered that it relies on the accurate preservation of the characteristics of the reflected sensing signal, such as its amplitude, phase, and delay, to extract information about the detected objects. Applying interference-reducing transformations to the received sensing signal blindly or in a non-adaptive manner may alter these characteristics and degrade the sensing performance.

In some aspects associated with OFDM-radar sensing, code domain multiplexing of sensing signals in different cells can avoid time/frequency resource overheads, allowing different cells to use overlapping spectrum resources. However, this may cause intercell interference that may lead to degradation in detection performance of OFDM-radar sensing due to reuse of spectrum resources in neighboring cells. The intercell interference causes increase in noise floor at the sensing receiver resulting in some performance degradations. We propose digital interference cancellation methods at sensing receiver to mitigate the effects of intercell interference.

Correspondingly, in JCAS systems, there may be a need for interference management techniques that can effectively mitigate the impact of interference on the sensing operation while preserving the information about the detected objects of the reflected sensing signal. These techniques may involve the design of specialized sensing waveforms, the use of advanced signal processing algorithms, and/or the coordination of multiple JCAS systems to minimize inter-system interference. In summary, interference is a significant challenge in JCAS systems, as it can degrade the performance of the sensing operation. While interference-reducing transformations are commonly applied to communication signals, their application to sensing signals is not as widespread due to the need to preserve the characteristics of the reflected sensing signal.

For example, previously, interference cancellation algorithms like successive interference cancellation (SIC) have been developed for communications receiver. However, those methods are specific to the communication receiver chain and cannot be directly used in sensing receiver chain, because the method of recreating the interfering signals to subtract from the received signal at the sensing receiver may be different from the method for communications. For instance, the SIC method in communications receiver may involve decoding the interference data and re-encoding to recreate the interference signal. Since the sensing receiver processing does not involve any decoding of data, it may not be trivial to apply the SIC method. It may be desired to apply alternative methods to estimate interference signal with processing gain such that cancelling interference does not lead to injecting excessive amount of noise into the desired signal. Hence, new interference estimation and cancellation methods that are suitable for sensing receiver may be desirable.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3 GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

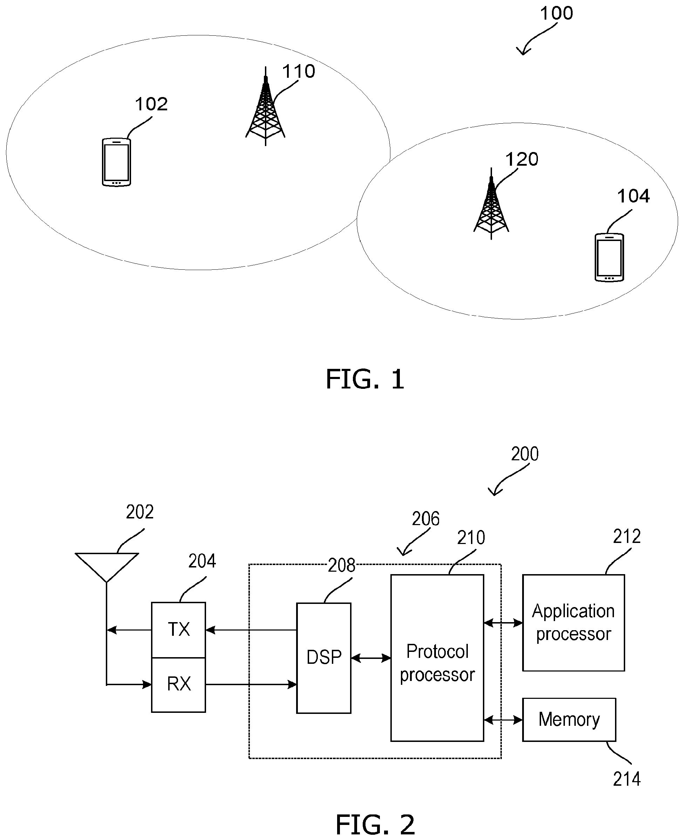

FIGs. 1 and 2 depict a general network and device architecture for wireless communications and/or sensing operations. In particular, FIG. 1 shows exemplary radio communication network 100 according to some aspects, which may include terminal devices 102 and 104 and network access nodes 110 and 120 (e.g. radio access nodes). Radio communication network 100 may communicate with terminal devices 102 and 104 via network access nodes 110 and 120 over a radio access network. Each of terminal devices 102 and 104 or network access nodes 110 and 120 may be a sensing communication device as described herein that may perform a sensing operation. Although certain examples described herein may refer to a particular radio access network context (e.g., 6G, 5G NR, LTE, UMTS, GSM, other 3rd Generation Partnership Project (3GPP) networks, WLAN/WiFi, Bluetooth, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). Furthermore, terminal devices 102 and 104 and network access nodes 110 and 120 may perform a sensing operation, particularly radar sensing, in accordance with JCAS architecture. In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

In accordance with various aspects described herein, network access nodes 110 and 120 and terminal devices 102 and 104 performing their respective sensing operations in a manner, such that each device may perform its respective sensing operation according to its respective sensing signal configuration. Accordingly, each of these devices may generate and transmit its respective sensing signals according to a respective configuration that may include at least one of frequency resources used to transmit sensing signals, the bandwidth of the sensing signals, transmit power of the sensing signals, and waveform shape of the sensing signals which the respective device may determine before generating and/or transmitting the sensing signals. In some examples, a central orchestrator (e.g. a sensing orchestrator) may determine a respective sensing signal configuration for each device and send information representing the respective sensing signal configuration to the respective device.

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include 6G, 5G NR, LTE, UMTS, GSM, WiMAX, Bluetooth, WiFi, mmWave, etc., any of which may be applicable to radio communication network 100.

In various aspects, network access nodes 110 and 120 may include one or more CUs, one or more DU, and one or more RUs to communicate with terminal devices 102 and 104. In various examples, an RU may include a device configured to implement various processing functions for RF. In particular the RU may implement functions of a lower PHY. A DU may include a device configured to implement various processing functions, in particular including functions of a higher PHY, MAC, and RLC. The skilled person may realize that this is one example of a split of the network stack and DUs and RUs may have different split configurations. The RU may be linked to terminal devices 102 and 104 over a radio connection, and to the DU over a fronthaul interface. In various examples, the fronthaul interface may be according to a Common Public Radio Interface (CPRI) or an Enhanced Common Public Radio Interface (eCPRI) configured to communicate over a connection via fiber optic cables, but there are also other communication mediums that may handle the fronthaul communication. In any event, the RUs may be serving a plurality of terminal devices, and there may be limitations in terms of link capacity and bandwidth with respect to the communication between the RUs and a corresponding DU over the fronthaul. It may desirable to address some of the fronthaul limitations.

It may be desirable to implement massive MIMO to provide extra system capacity with a plurality of antennas (64, or even 128) at the macro base station side, which usually support 8, 12 or even 16 concurrent Uplink / Downlink streams (i.e., antenna ports) at the same time/frequency resources. Due to the limited bandwidth of fronthaul from the antenna array to the BBU, the physical layer signal must be processed in the Radio Unit (RU) or split with certain processing at RU and some other processing in Distributed Unit (DU), as O-RAN defined.

FIG. 2 shows an exemplary internal configuration of a communication device (e.g. a sensing communication device) according to various aspects provided in this disclosure. The communication device may include various aspects of radio communication devices (e.g. network access nodes 110, 120) or various aspects of mobile radio communication devices (e.g. terminal device 102, 104) as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

In accordance with various aspects provided herein, the communication device 200 may perform sensing operations within the radio communication network 100. Illustratively, the baseband modem 206, (e.g. the digital signal processor 208) may be configured to perform sensing-related signal processing in addition to traditional communication processing. For example, the baseband modem 206 may be configured to implement techniques like radar waveform generation, matched filtering for target detection, parameter estimation (e.g., range, velocity, angle) of detected targets, and environmental mapping. In some examples, the baseband modem 206 (e.g. the digital signal processor 208) may use its hardware accelerators and parallel processing capabilities to efficiently handle the computationally intensive sensing algorithms alongside communication tasks.

Furthermore, the baseband modem 206 (e.g. the protocol controller 210) may be configured to coordinate and/or manage joint operation of communication and sensing functions. Illustratively, the baseband modem 206 may This schedule sensing and communication operations, allocate resources (e.g., time/frequency resources, antenna beams) between the sensing operations and the communication operations, and manage interference between them. The baseband modem (e.g. the protocol controller 210) may further implement sensing control protocols and interfaces to enable coordination with other network entities for distributed sensing operations as described herein.

In some examples, the application processor 212 may be configured to act as a source and sink for sensing data, similar to its role for communication data. The application processor 212 may execute sensing applications that are configured to process and interpret the sensing data received from the baseband modem 206. Illustratively, the application processor 212 may perform at least one of object detection and tracking, environmental mapping, and/or situational awareness services using the sensing data. In some examples, the application processor 212 may interface with external sensors (e.g., cameras, lidars) to fuse data from multiple sensing modalities for enhanced perception capabilities.

Correspondingly, the RF transceiver 204 may further support the transmission and reception of sensing waveforms in addition to communication signals. Illustratively, the RF transceiver 204 may generate and transmit sensing signals (e.g., frequency-modulated continuous waveforms for radar), and may process the received sensing signals to extract target information. In some examples, the RF transceiver 204 can use the same analog and digital components (e.g., amplifiers, filters, modulators/demodulators, ADCs/DACs) for sensing operations and the communication operations, potentially with additional hardware accelerators for sensing-specific tasks. Illustratively, the antenna system 202 may also support both communication and sensing functions, in some examples with separate antenna arrays or shared arrays with beamforming capabilities. In accordance with various aspects, the antenna system 202 can form narrow beams for extended sensing range or wide beams for faster coverage, depending on the sensing requirements and resource constraints. Techniques like MIMO and beamforming can be employed to enhance the sensing performance and enable features like high-resolution target parameter estimation and interference mitigation.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

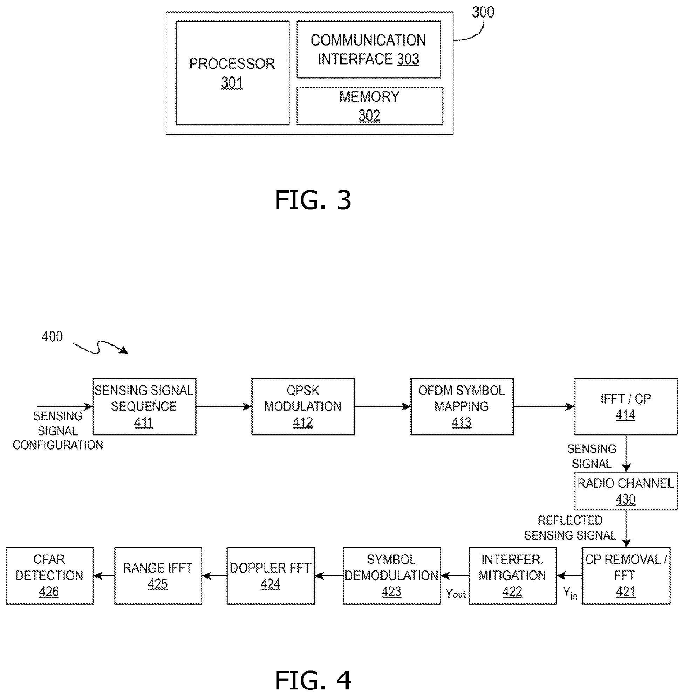

FIG. 3 shows an illustrative example of an apparatus in accordance with various aspects described herein. A communication device (e.g. the communication device 200) configured to operate as a sensing device (e.g. a sensing communication device) may include the apparatus 300. Illustratively, the communication device may be a network access node 110, 120, or a terminal device 102, 104. In cellular communication context, the communication device may be a BS, such as a gNB or eNB, or a UE configured to perform a sensing operation as described herein.

The apparatus 300 may include a processor 301, a memory 302, and a communication interface 303 configured to receive and transmit communication signals in order to communicate with further entities within the radio access network. In some aspects, the communication interface 303 may include one or more signal paths to carry communication signals. The communication interface 303 may include one or more transceivers. In some examples, the communication interface 303 may further configured to transmit sensing signals and receive reflected sensing signals as described herein.

The processor 301 may include one or more processors, which may include a baseband processor and an application processor (e.g. application processor 212, baseband modem 206). In various examples, the processor 301 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 301 may be implemented in one processing unit, e.g. a system on chip (SOC), or a processor. In accordance with various examples, the processor 301 may further provide further functions to process received communication signals. The memory 302 may store various types of information required for the processor 301, or the communication interface 303 to operate in accordance with various aspects of this disclosure.

In some examples, while the communication device may provide communication and/or sensing services in its respective coverage area, the communication interface 303 may be configured to communicate with a plurality of further communication devices (e.g. further radio access nodes and/or UEs), each configured to provide communication and/or sensing services in their respective coverage areas. For example, the apparatus 300 may receive information from each of the further communication devices via the communication interface 303, some of which are described herein. For example, the apparatus 300 may provide instructions to each of the further communication devices via the communication interface 303 as described herein.

Illustratively, the communication interface 303 may include a transceiver (e.g. RF transceiver 204) configured to transmit communication signals and sensing signals. In some examples, the transceiver may include a transmitter that may selectively transmit the communication signals and the sensing signals. The transceiver may further configured to receive communication signals and reflected sensing signals. In some examples, the transceiver may include a full duplex transceiver that may simultaneously transmit sensing signals and receive reflected sensing signals in view of the transmitted sensing signals. For example, for particular time and frequency resources, the transceiver may transmit the sensing signals and listen for the particular time and frequency resources for the reflected sensing signals.

The processor 301 may instruct the apparatus 300 to perform a sensing operation in designated time and frequency resources. Correspondingly, the processor 301 may cause the communication interface 303 to transmit sensing signals within the designated time and frequency resources and to receive the reflected sensing signals associated with the transmitted sensing signals within the designated time and frequency resources. In some examples, the processor 301 may instruct the apparatus to perform the sensing operation based on a determined sensing signal configuration for the sensing operation to be performed as described herein.

The processor 301 may determine a sensing signal configuration to perform the sensing operation. Furthermore, the processor 301 may determine one or more further sensing signal configurations for one or more further communication devices, in which each further sensing signal configuration may be a respective sensing signal configuration of a respective further communication device. In various examples, the processor 301 may determine the one or more further sensing configurations based on received information representing the respective sensing signal configuration of each further communication device. Illustratively, the apparatus 300 may communicate with the further communication devices via the communication interface 303 to receive the information. To provide its own sensing signal configuration, the processor 301 may encode information representing the sensing signal configuration of the communication device for a transmission to the further communication devices via the communication interface 303.

Illustratively, a sensing signal configuration of a further communication device may include at least one of frequency resources used to transmit sensing signals, the bandwidth of the sensing signals, transmit power of the sensing signals, and waveform shape of the sensing signals to be used by the further communication device for its respective sensing operation. In accordance with various aspects described herein, a respective sensing signal configuration of a further communication device may particularly include an identifier that represents sensing signal (e.g. the waveform shape of the sensing signal) to be transmitted by the further communication device.

The processor 301 may estimate an interference of at least one further communication device based on the respective sensing signal configuration of the at least one further communication device. The estimated interference may correspond to an interference estimated that is to be caused by the at least one further communication device on a sensing signal to be transmitted on a designated time and frequency resources. Illustratively, the processor 301 may schedule a sensing signal to be transmitted within $f_1$ frequency resources (e.g. subcarriers) and within $t_1$ time resources (e.g. OFDM symbol), and the estimated interference may correspond to an interference that is to be caused by the at least one further communication device on the $f_1$ frequency resources and/or $t_1$ time resources.

In accordance with various aspects provided herein, while the communication device may be configured to transmit its sensing signal within $f_1$ frequency resources and at $t_1$ time resources, the at least one further communication device may also be configured transmit their respective sensing signals within, at least partially, the same frequency and time resources (e.g. $f_1$ frequency resources, $t_1$ time resources) in which the communication device transmits its sensing signal. For example, a sensing orchestrator (e.g. an external entity or one of the communication device and the at least one further communication device) may instruct the communication device and the at least one further communication device to transmit their respective sensing signals at designated time and frequency resources, in a manner that the time and frequency resources overlap at least partially.

In accordance with various aspects provided herein, the communication device and the at least one further communication device may be provided at their respective locations in a non-mobile manner, i.e. without changing their locations. Illustratively, they may be BSs deployed at fixed locations. Correspondingly, the interference signals may have limited, close to non-existing, Doppler spread, which may increase the accuracy of interference mitigation techniques.

In accordance with various aspects described herein, the processor 301 may generate its own sensing signal sequence based on a determined sensing signal configuration for the communication device. The processor 301 may further generate respective sensing signal sequences of one or more further communication devices based on their respective sensing signal configurations. Illustratively, the memory 302 may store base information used to generate sensing signal sequences (e.g. information representing a mathematical formula based on a parameter). The processor 301 may generate a plurality of different sensing signal sequences based on the base information and a variable that can take multiple values. Each value may cause the processor 301 to generate a different sensing signal sequence, which may correspond to an identifier of the sensing signal sequence. In some examples, the base information may include mapping information to map each identifier of multiple identifiers to a respective sensing signal waveform.

Correspondingly, the processor 301 may use its own determined sensing signal configuration including a first identifier representing the waveform of the sensing signal to be transmitted by the communication device to obtain a first sensing signal sequence based on the base information and the first identifier. Furthermore, the processor 301 may further use respective sensing signal configurations of further communication devices, each including a respective identifier (e.g. second, third, fourth, etc.), to obtain respective (e.g. second, third, fourth, etc.) sensing signal sequences, each obtained respective sensing signal sequence is estimated to be used by a respective further communication device for its respective sensing operation. The processor 301 may instruct the first sensing signal to be transmitted in a designated time and frequency resources and the processor 301 may use obtained respective sensing signal sequences for further communication devices to estimate the sensing interference on the first sensing signal in the designated time and frequency resources.

Once the communication device receives reflected sensing signals, the processor 301 may perform an interference mitigation technique (e.g. an interference cancellation technique) based on an estimated sensing interference of the at least one further communication device. In case of performing the interference mitigation technique for multiple further communication devices, the processor 301 may use at least one or more respective estimated sensing interferences of one or more further communication devices respectively to perform the interference mitigation technique. The processor 301 may obtain an output signal by performing the interference mitigation technique, in which the output signal may represent an interference mitigated reflected sensing signal. Based on the obtained output signal, the processor 301 may identify information about a detected object. Illustratively, the output signal may indicate at least one of an identity of the object, a location of the object, a range of the object, a velocity of the object, or an angle of the object. The processor 301 may apply various techniques to determine at least one of an identity of the object, a location of the object, a range of the object, a velocity of the object, or an angle of the object, some of which are described herein.

FIG. 4 shows an illustrative example of a sensing operation in accordance with various aspects described herein. Illustratively, a processor (e.g. the processor 301) of a communication device (e.g. the communication device 200), which the communication device may be referred to as the sensing device, may implement the aspects described herein to perform the sensing operation 400. Aspects are described by referring to the processor 301.

In OFDM radar sensing, OFDM-based sensing signals may be transmitted and received simultaneously by the sensing device (e.g. a BS and/or a UE) for detecting objects in the surrounding environment. Illustratively, the communication device may be one of the BS and/or the UE and further communication devices may be further BSs and/or further UEs. In one particular example, the communication device is the BS and the further communication devices are further BSs to prevent additional Doppler spread. The sensing device may correspond to a radar sensing device of a radar system. The sensing device may include an RF transceiver (e.g. the RF transceiver 204) for radio capabilities for in-platform symbol interference (SI) in the transmit (Tx) and receive (Rx) path. In an example, a sensing signal may be received at the receiver side of the sensing device. In some examples, the receiver side may include an antenna system (e.g. the antenna system 202). In accordance with various aspects disclosed herein, the term "sensing signal" may refer to or include a signal (e.g. a radiofrequency signal) sent by a transmitter (e.g. via Tx path) of the sensing device 300. Such a signal may be transmitted toward an area in order to detect an object (e.g. target) within the area. Accordingly, the term "reflected sensing signal" may refer to or include a signal reflected from the object. In an example, an amount of transmitted signal energy may bounce back from the object to arrive at the receiver of the sensing device 300. In some aspects, the transmitted signal may be an orthogonal frequency division multiplexing (OFDM) signal (i.e. OFDM symbols). In some examples, a portion of the transmitted signal may be reflected from an object (e.g. a target). Therefore, OFDM symbols may echo from the object to arrive at the receiver of the sensing 300. In such a case, the received sensing signal may refer to or include OFDM symbols as received sensing symbols. In some aspects aligned with the disclosure, received sensing signals and received sensing signal symbols may be used to perform target detection.

For illustration purposes, the sensing operation 400 may include sensing transmitter operations including sensing signal sequence 411, Quadrature phase shift keying (QPSK) modulation, OFDM symbol mapping, and inverse Fast Fourier Transform (IFFT) and Cyclic Prefix (CP) 414 and sensing receiver operations including CP removal/FFT 421, an Interference Mitigation 422 Symbol Demodulation 423, Doppler FFT 424, Range IFFT 425, and CFAR Detection 426. In some examples, the sensing device may include a transceiver configured to implement full duplex transceiver capabilities with sufficient isolation between the transmit and receive antennas that may provide reliable sensing performance, and correspondingly the sensing device may perform both of the sensing receiver operations and the sensing transmitter operations as described herein. In some examples, other sensing modes, e.g., bistatic sensing mode, involving different nodes for transmission and reception of sensing signal can be considered as well. In other words, in some examples a first sensing device may perform the sensing transmitter operations while a second sensing device may perform the sensing receiver operations. For brevity, aspects described herein for a case in which the sensing device may implement both of the sensing receiver operations and the sensing transmitter operations.

In various aspects, the processor 301 may determine a sensing signal configuration for sensing signals to be transmitted for the sensing operation. In some examples, the sensing signal configuration may be specific for the communication device, such that it distinguish the sensing signal to be transmitted for the sensing operation from further sensing signals that further communication devices transmit within the environment. Illustratively, the communication device performing this particular sensing operation 300 may be a BS of a cell and further communication devices within the environment may be further BSs of neighboring cells that are in proximity to the cell. For example, the sensing signal configuration may include at least one of frequency resources used to transmit sensing signals, the bandwidth of the sensing signals, transmit power of the sensing signals, and waveform shape of the sensing signals.

In accordance with various aspects described herein, the sensing signal configuration may particularly include an identifier that represents the waveform shape of the sensing signal to be transmitted. Illustratively, the processor 301 may generate the sensing signal sequence 411 based on the identifier. In some examples, the processor 301 may use the identifier as a feed into a predefined random sequence or a pseudo-random sequence to generate the sensing signal sequence. In some examples, the identifier may indicate to one predefined random or pseudo-random sequence of a plurality of random or pseudo-random sequences.

In some examples, sensing signals described herein may include corresponding positioning reference signals (PRSs). In such examples, a sensing signal sequence may be defined by:

$$r(m) = \frac{1}{\sqrt{2}}\big(1 - 2c(2m)\big) + j\frac{1}{\sqrt{2}}\big(1 - 2c(2m + 1)\big)$$

; in which c is a pseudo random sequence defined by a length 31-Gold sequence. The output sequence c(n) of length $M_{PN}$, where $n = 0,1,...,M_{PN} - 1$, may denoted by:

$$c(n) = \big(x_1(n + N_C) + x_2(n + N_C)\big)\mathrm{mod}\,2$$

$$x_1(n+31) = (x_1(n+3) + x_1(n)) \bmod 2$$

$$x_2(n+31) = (x_2(n+3) + x_2(n+2) + x_2(n+1) + x_2(n)) \bmod 2$$

where $N_C$ = 1600 and the first m-sequence $x_1(n)$ shall be initialized with $x_1(0)$ = 1, $x_1(n)$ = 0, $n$ = 1,2,...,30 . The initialization of the second m-sequence, $x_2(n)$ , is denoted PRS by:

$$c_{\text{init}} = \left( 2^{22} \left\lfloor \frac{n_{\text{ID,seq}}^{\text{PRS}}}{1024} \right\rfloor + 2^{10} \left( N_{\text{symb}}^{\text{slot}} n_{\text{s,f}}^{\mu} + l + 1 \right) \left( 2 \left( n_{\text{ID,seq}}^{\text{PRS}} \bmod 1024 \right) + 1 \right) + \right.$$

$$\left. \left( n_{\text{ID,seq}}^{\text{PRS}} \bmod 1024 \right) \right) \bmod 2^{31}$$ ;

where $n_{\text{s,f}}^{\mu}$ is the slot number, the downlink PRS sequence ID $n_{\text{ID,seq}}^{\text{PRS}} \in \{0, 1, \dots, 4095\}$ is given by the higher-layer parameter *dl-PRS-SequenceID*, and *l* is the OFDM symbol within the slot to which the sequence is mapped. In various aspects, an identifier used in various aspects of this disclosure, which represents respective sensing sequences or signals, may correspond to an identifier that indicates a respective r(m), or in some examples it may correspond to the downlink PRS sequence ID.

At block 412, the processor 301 may perform a modulation based on the generated sensing signal sequence to obtain a sensing signal. In this illustrative example, the processor 301 performs a QPSK modulation to obtain QPSK symbols. At block 413, the processor 301 may perform a symbol mapping to map modulated symbols. For example, the processor 301 may perform OFDM symbol mapping. The processor 301 may further perform IFFT and add cyclic prefix (CP) 414, and the communication device may transmit the RF sensing signal in the air, which is depicted as the radio channel 430.

It is to be noted herein that the processor 301 may perform the sensing operation in a designated period of time that may be defined as a sensing frame. A sensing frame may include a set of RF sensing signals transmitted at designated time instances within the designated period of time. For example, the communication device may transmit the RF sensing signals at regular time intervals. In some examples, the sensing operation may include use of multiple beam configurations at different directions to cover a designated field of view gradually with each designated beam direction. In these examples, the communication device may transmit multiple RF sensing signals and receive multiple reflected sensing signals.

The sensing operation may further include, at block 421, the communication device receiving the reflected sensing signal in response to the transmitted RF sensing signal, and removing the CP and performing an FFT to obtain transmitted frequency domain symbols from the reflected sensing signal. In some examples, in which illustratively an interference mitigation technique is not applied, the processor 301 may perform symbol demodulation 423 to determine channel estimates from the obtained frequency domain symbols the frequency directly without performing the interference mitigation technique (e.g. block 422).

For this purpose, the processor 301 may compute channel estimates using the received sensing symbols (i.e. one or more received reflected sensing signals) within the sensing frame, which may be represented by a two-dimensional frequency domain channel matrix, in which each element $\hat{H}_{nm}$ indicates channel estimate for subcarrier $n \in \{1,2, ..., N\}$ and sensing symbol $m \in \{1,2, ..., M\}$:

$$\widehat{H} = \begin{bmatrix} \widehat{H}_{11} & \widehat{H}_{12} & \cdots & \widehat{H}_{1M} \\ \widehat{H}_{21} & \widehat{H}_{22} & \cdots & \widehat{H}_{2M} \\ \vdots & \vdots & \ddots & \vdots \\ \widehat{H}_{N1} & \widehat{H}_{N2} & \cdots & \widehat{H}_{NM} \end{bmatrix}$$

At block 423, the processor 301 may implement a sensing symbol demodulation. In some examples, the sensing symbol demodulation may be implemented as an element-wise divider. Such an implementation may be essential for deriving information (i.e. Doppler information) about the target. In some aspects, the sensing symbol demodulation may assist in obtaining the target's range profile and/or velocity. Additionally, or alternatively, the sensing symbol demodulation may assist in obtaining the original information within the received reflected sensing signal.

Based on the obtained channel estimate, the processor 301 may perform, at block 424, Doppler FFT, and, at block 425, Range IFFT to determine a range-Doppler profile based on the received reflected sensing signals in the sensing frame. The processor 301 may implement slow time processing for the received reflected sensing signal. In some examples, the fast time processing may refer to processing of the reflected sensing signal received within a plurality of signal repetition interval (SRI). In some aspects, slow time processing may include operations related to slow time direction. Accordingly, the slow time direction may refer to the Doppler direction within the range-Doppler domain. The slow time processing may include the implementation of Doppler FFT to process the received reflected sensing signal. At block 424, the processor 301 may implement Doppler FFT as a part of slow time processing in order to obtain Doppler frequency shifts occurred due to motion of the target. In some examples, Doppler FFT may be a relevant process to derive certain Doppler information (e.g. velocity) of the target. The processor 301 may, at block 425, implement fast time processing for the received reflected sensing signal. In some examples, the fast time processing may refer to processing of the sensing signal received within each signal repetition interval (SRI). In some aspects, fast time processing may include operations related to fast time direction. Accordingly, the fast time direction may refer to the range direction within the range-Doppler domain. The fast time processing may include the implementation of range IFFT to process the received sensing signal. At block 425, the processor 301 may implement range IFFT as a part of fast time processing in order to transfer an obtained range profile (e.g. obtained through implementing matched filter and range FFT) associated with the target to the time domain.

At block 426, the processor 301 may implement a constant false alarm rate (CFAR) in order to reliably detect targets within the range-Doppler domain for further processing. Further processing may exemplary include AoA processing. In some examples, the range-Doppler periodogram estimation may be an input for CFAR processing to eliminate false targets. For example, false targets may be associated with a signal power that falls below a threshold set for the CFAR. Such targets may be declined and only the targets with a signal power that falls above the threshold may be selected for e.g. AoA processing. At block 426, the processor 301 may implement AoA processing for the selected targets.

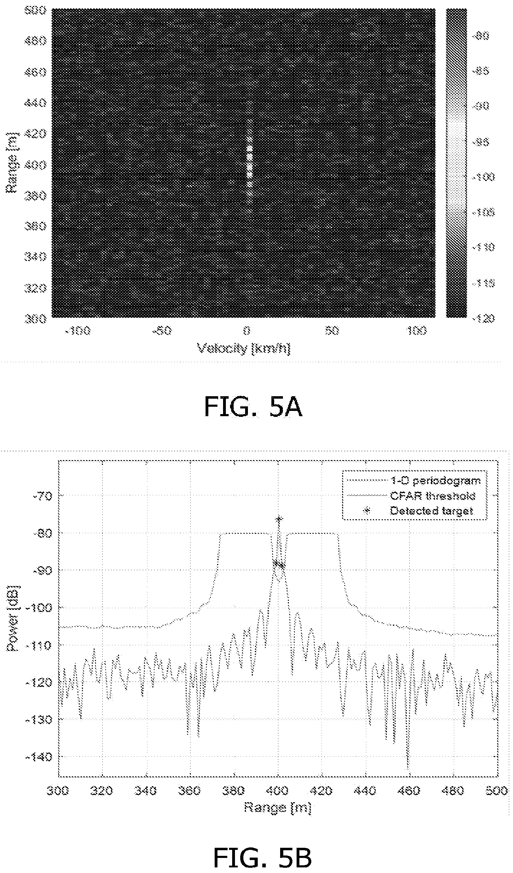

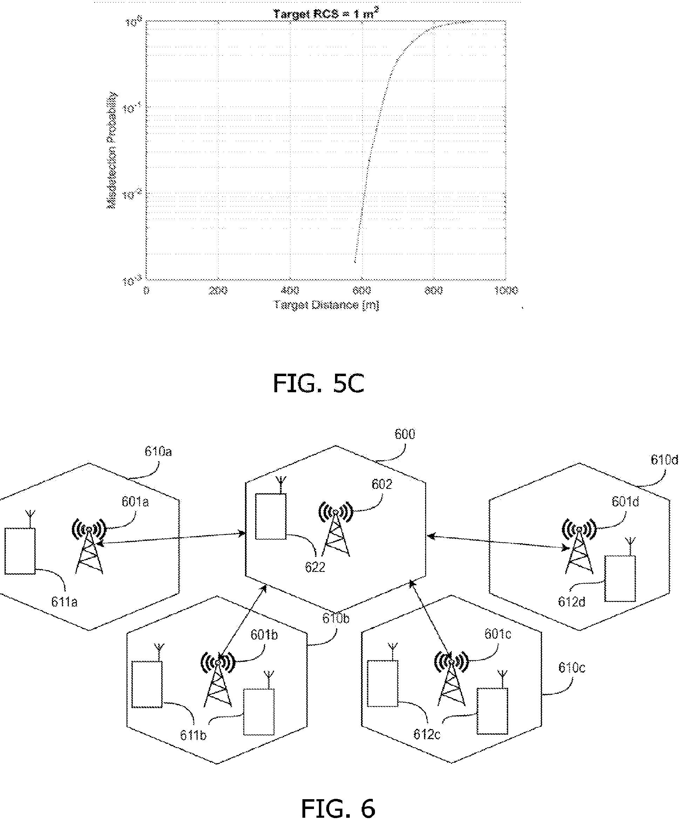

FIGs. 5A-5B shows illustrative examples of two dimensional and one-dimensional periodograms respectively, which a processor (e.g. the processor 301) may obtain in a sensing operation depicted herein. In FIG. 5A, peak power has occurred at 400 meter range and 0 km/h velocity, which correspond to target distance and velocity parameters set in a simulator configuration. FIG. 5B shows a simplified visualization of the same phenomenon via a one dimensional periodogram, which is a snapshot of power V/s range plot at velocity of 0 km/h cut of the two dimensional periodogram depicted in FIG. 5A, noting that a CFAR detection algorithm is applied, which generates a threshold above the noise floor of the periodogram. Furthermore, FIG. 5C shows an example graph of misdetection probability as a function of target distance with respect to the periodograms depicted in FIGs. 5A and 5B. Due to the presence of thermal noise, there may be a probability of misdetection, which may correspond to the probability of power value in periodogram not exceeding the designated CFAR threshold even in the presence of a detected object (i.e. target). The configuration of the simulator provided herein is the following: Carrier frequency is at 4.7 GHz, FFT size is 2048, subcarrier spacing is 60 kHz, bandwidth is 100 MHz (135 resource blocks), sensing signal type is a PRS signal, detector type is CFAR detection with $10^{-5}$ false alarm rate, number of sensing symbols is 64, maximum range is 2500m, transmit power is 24 dBm, Tx/Rx antenna gain is 8/8 dBi, noise PSD is -174dBm/Hz.

In accordance with various aspects provided herein, in which the processor 301 may perform an interference mitigation technique, the sensing operation may include an interference mitigation, as depicted in block 422. When the processor 301 is configured to apply the interference mitigation technique for a sensing frame, illustratively at designated time and frequency resources, the processor 301 may estimate a sensing interference of at least one further communication device based on corresponding sensing signal configuration of the at least one further communication device. The processor 301 may further perform an interference mitigation (e.g. interference cancellation) on received reflected sensing signal using the sensing interference.

At block 422, the processor 301 may perform an interference mitigation technique on the reflected sensing signal received by the communication device. Furthermore, the processor 301 may estimate a corresponding sensing reference for at least one further communication device as described herein. After performing of the interference mitigation technique, the processor 301 may obtain an output signal and provide the output signal for further blocks of the sensing operation, illustratively to the symbol demodulation block 423. The output signal may represent an interference mitigated version of the received reflected sensing signal. An interference mitigated version of the received reflected signal may correspond to a processed reflected sensing signal, in which the received reflected sensing signal components are adjusted to mitigate the interference.

In this example, at block 422, the processor 301 may obtain frequency domain samples (e.g. symbols), $Y_{in}$, which represents the received reflected sensing signal, from the previous operation depicted in block 421. The processor 301 may adjust the obtained frequency domain symbols to generate interference mitigated frequency domain symbols, $Y_{out}$, and use the generated interference mitigated frequency domain symbols at block 423 for the symbol demodulation. Through further operations of the sensing operation, illustratively depicted at blocks 423-426, the processor may analyze the generated interference mitigated frequency domain symbols, $Y_{out}$, to determine at least one of an identity of the object, a location of the object, a range of the object, a velocity of the object, or an angle of the object, for the object that is detected in the sensing operation.

The processor 301 may perform any interference mitigation technique that may use the estimated sensing interferences as described herein to obtain the output signal. In some examples, the processor 301 may perform a successive interference cancellation technique as the interference mitigation technique based on the estimated sensing interferences of at least one further communication device to obtain the output signal. Illustratively, the processor, at block 422, may obtain the $Y_{in}$ and estimate interference signal(s) of at least one further communication device included in the received OFDM symbols of reflected sensing signal, and subtract the estimated interference signal(s) from the received OFDM symbols to obtain the output signal. The skilled person would recognize that the output, $Y_{out}$, may, in reality, include some residual interference signals, yet they will be mitigated.

FIG. 6 shows an illustrative example of a radio communication network in accordance with various aspects described herein. The network may include multiple cells. A cell may be referred to as a particular geographical region covered by a radio access node (e.g. radio unit) in which the radio access node provides a network access service to terminal devices. The size of a cell may depend on the mobile radio communication technology used by the radio access node associated with the cell. For example, within the context of a wireless local area network (WLAN), a cell may have a radius of up to 100 meters, while within the context of cellular communication a cell may have a radius of up to 50 kilometers. It is further to be noted that for a radio access node, the larger the coverage region is, more power may be consumed for providing services to more terminal devices illustratively with higher transmit powers.

The network may include multiple cells 610a-d, each cell being associated a radio access node (e.g. access nodes 110, 120) configured to provide a radio access service to multiple terminal devices (e.g. terminal devices 102, 104). Aspects associated with the radio access service provided by the respective radio access node may be represented in relation to the respective cell. In other words, the aspects provided in this disclosure with respect to a cell may also be represented as aspects with respect to the radio access node and/or the radio access service provided by the radio access node. It is to be noted that the network may include many cells associated with many radio access nodes.

A cell 600 is depicted as it includes a radio access node 602 serving multiple UEs 622. The cell 600 depicted herein may be in a proximate relationship with neighboring cells, which may interfere with each other, especially for their respective sensing operations. The neighboring cells may be one or more cells as the following: A first cell 610a is depicted as it includes a first radio access node (e.g. a BS) 601a serving first UEs 611a. A second radio access node 601b provides radio network services to second UEs 611b within a corresponding second cell 610b. A third radio access node 601c provides radio network services to third UEs 611c within a corresponding third cell 610c. A fourth radio access node 601d provides radio network services to fourth UEs 611d within a corresponding fourth cell 610d. Some UEs may be associated with multiple radio access nodes as well which may be depending their association and geographical location.

In this constellation, each depicted entity, whether it is a UE or a radio access node, may include the communication device described herein, which may include the apparatus 300, which may perform the sensing operation 400 as described herein. Aspects are described herein with an illustrative example of the radio access node 602 being a respective communication device including an apparatus in the configuration of the apparatus 300. Furthermore, each first, second, third, and fourth radio access nodes 601a-d may further include a respective apparatus in the configuration of the apparatus 300, yet they are to be referred to as further communication devices from the perspective of the radio access node 602. In this illustrative example, the further communication devices for the radio access node 602 are neighboring radio access nodes 601a-d. For the purpose of illustration, the radio access node 602 includes the apparatus 300 including the processor 301.

In accordance with aspects described herein, the processor 301 may determine at least one sensing signal configuration of at least one of the further communication devices, namely at least one of the radio access nodes 601a-d. The processor 301 may, for the at least one of the radio access nodes 601a-d, estimate a respective sensing interferences for each one of the at least one of the radio access nodes 601a-d based on the respective sensing signal configurations. The processor 301 may further perform an interference cancellation on received reflected sensing signal using the respective sensing interferences.

Illustratively, in case the at least one of the radio access nodes 601a-d include only the first radio access node 601a, the processor 301 may determine the sensing signal configuration of the first radio access node 601a. The processor 301 may further estimate a sensing interference of the first radio access node 601a, which may represent the interference by the first radio access node 601a estimated to sensing signals to be transmitted by the radio access node 602, based on the sensing signal configuration of the first radio access node 601a. The processor 301 may perform an interference cancellation (i.e. mitigation) on reflected signals received by the radio access node 602 using the sensing interference of the first radio access node 601a. For example, the processor 301 may determine a respective sensing signal configuration of each neighboring radio access nodes, and, for at least one neighboring radio access node, the processor 301 may estimate a respective sensing interference. In some examples, the processor 301 may estimate respective sensing interferences for a subset of neighboring radio access nodes 601a-d. In some examples, the processor 301 may estimate respective sensing interferences for all neighboring radio access nodes 601a-d, which may be predefined or predetermined.

Illustratively, in case the at least one of the radio access nodes 601a-d include the first radio access node 601a and the second radio access node 601b, the processor 301 may determine a first sensing signal configuration of the first radio access node 601a and a second sensing signal configuration of the second radio access node 601b. The processor 301 may further estimate a first sensing interference of the first radio access node 601a based on the first sensing signal configuration and estimate a second sensing interference of the second radio access node 601b based on the second sensing signal configuration. The processor 301 may perform an interference cancellation (i.e. mitigation) on reflected signals received by the radio access node 602 using the first sensing interference and the second sensing interference.

Illustratively, to determine sensing signal configurations of neighboring radio access nodes, the radio access node 602 may receive information representing the sensing signal configuration of the neighboring radio access nodes 601a-d from the network (e.g. from the neighboring radio access nodes 601a-d directly or from a network function configured to receive the information from the neighboring radio access nodes 601a-d and provide the information to the radio access node 602). Similarly, the processor 601 may encode information representing its own sensing signal configuration and the radio access node 602 may transmit the encoded information to the neighboring radio access nodes 601a-d and/or to the configured network function.

In some examples, each of the radio access node 602 and the neighboring radio access nodes 601a-d may be configured to perform its respective sensing operation in designated time and frequency resources that may, at least partially, overlap. Illustratively, each radio access node may be configured to transmit their respective sensing signals in the same designated frequency resources (e.g. via predetermined subcarriers) and the same time resources (e.g. via predetermined symbols in a time slot). As described herein, these respective sensing signals may be based on respective sensing signal sequences for each radio access node.

Illustratively, the radio access node 602 may obtain its sensing signals from a zeroth sensing sequence that may be represented with an identifier ID0. Similarly, the first radio access node 601a may obtain its sensing signals from a first sensing sequence that may be represented with an identifier ID1. The second radio access node 601b may obtain its sensing signals from a second sensing sequence that may be represented with an identifier ID2. The third radio access node 601c may obtain its sensing signals from a third sensing sequence that may be represented with an identifier ID3. The fourth radio access node 601d may obtain its sensing signals from a fourth sensing sequence that may be represented with an identifier ID4. The radio access node 602 may obtain information representing the respective identifiers used by each neighboring radio access node 601a-d as part of the respective sensing signal configurations, for example, by decoding received communication signals from the neighboring radio access nodes 601a-d or from the configured network function (e.g. from the entity of the network that implements the configured network function).

The processor 301 may estimate respective sensing interferences for at least one neighboring radio access nodes 601a-d, for a subset of neighboring radio access nodes 601a-d, or for all neighboring radio access nodes 601a-d, as described herein, in which each estimated sensing interference may represent an estimated interference of the respective neighboring radio access node 601a-d based on the respective sensing signal configuration, for example the respective identifier, of the respective neighboring radio access node 601a-d.

To estimate the sensing interference of a neighboring radio access node 601a-d, the processor 301 may replicate the respective sensing signal sequence that the neighboring radio access node 601a-d generates for its respective sensing operation. Illustratively, to transmit a respective sensing signal at a designated time and frequency resources, a neighboring radio access node 601a-d generates a respective sensing signal sequence represented by a respective identifier as described herein. The processor 301 may generate the same sensing signal sequence using the respective identifier to estimate the interference of that neighboring radio access node 601a-d. Illustratively, the processor 301 may generate that sensing signal sequence of a neighboring radio access node 601a-d based on the respective identifier of that neighboring radio access node 601a-d indicated in the respective sensing signal configuration of that neighboring radio access node 601a-d and a reference random or pseudo random sequence.

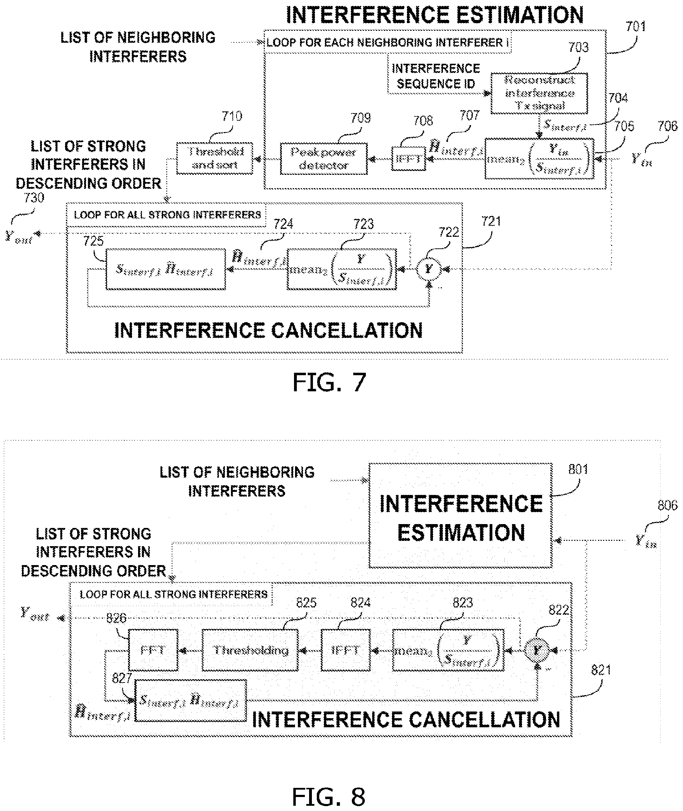

FIG. 7 shows an illustrative example of an interference mitigation technique according to various aspects provided herein. In some examples, the processor 301 may implement an interference mitigation technique, for example as the block 422 referring to FIG. 4, which further describes $Y_{in}$ and $Y_{out}$. The interference mitigation technique may include an interference estimation portion 701, in which the processor 301 determines one or more respective sensing interferences of one or more further communication devices and an interference cancellation portion 721, in which the processor 301 performs an interference cancellation. In this illustrative example, neighboring interferers may be exemplified as neighboring radio access nodes 601a-d. This exemplary technique may include an identification of strong interferers among all interferers and a successive interference cancellation in descending order of interference power.

The processor 301 may identify a list of neighboring interferers. Illustratively, the list of neighboring interferers may include interferers expected in the received set of sensing signals. Illustratively, the processor 301 may identify the neighboring radio access nodes 601a-d which may transmit their respective sensing signals in at least partially overlapping time and/or frequency resources. The processor 301 may determine respective identifiers used by each neighboring interferer in the list, which the respective identifier represents the sensing signal transmitted (i.e. sensing sequence generated) by the neighboring interferer in the list as described herein.

Following blocks 703, 704, 707-709 are performed for the processor 301 for each respective identifier (i.e. index i being an integer between 1 to N, N being the total number of neighboring interferers in the list; e.g. N=4 for the neighboring radio access nodes 601a-d) of a respective neighboring interferer in a loop. The processor 301 may, at block 703, reconstruct the respective sensing signal transmitted by the respective neighboring interferer. The reconstruction may include generating the sensing signal sequence based on a random or pseudo-random sequence and the respective identifier to obtain frequency domain sensing symbols (e.g. OFDM symbols) $S_{interf,i}$ 704 transmitted by the respective neighboring interferer with the index i in a sensing frame.

The processor 301 may, at block 705, calculate an elementwise division of $Y_{in}$ 706, that is the received reflected sensing symbols, by $S_{interf,i}$ 704 of the respective frequency domain sensing symbols of the neighboring interferer i, which may provide a frequency domain channel estimation of the neighboring interferer I during each OFDM symbol in the sensing frame. Noting that the radio access node 602 and the neighboring radio access nodes 601a-d may be at spatially fixed locations, the radio channel may be considered as time invariant. Correspondingly, in some examples, the processor 301 may calculate mean$_2$ (i.e. mean of the elementwise divided matrix) of the channel estimates across all the sensing symbols in the sensing frame to obtain an average channel estimation $\hat{H}_{interf,i}$, 707 of the respective neighboring interferer with the index i. The processor 301 may further perform an IFFT 708 of the average channel estimation of the respective neighboring interferer with the index i to determine a time domain impulse response of the interference channel for the respective neighboring interferer with the index i. The processor 301 may further determine the maximum instantaneous power of interference signals of the respective neighboring interferer with the index i using a peak power detector 709.

It is to be noted that the processor 301 may perform the operations in the blocks 703, 704, 707-709 for each neighboring interferer with its respective index and correspondingly obtain each information mentioned in these blocks for each neighboring interferer. In some examples, the processor 301 may perform these blocks in parallel, since they are independent computations. Moreover, in some examples, the input $Y_{in}$ 706 may include a sub-sampled version of the frequency domain symbols of the received reflected sensing signals to reduce complexity. The processor 301 may determine a sub-sampling rate to have sufficient samples of the frequency domain symbols of the received reflected sensing signals to get required processing gain to be able to detect interferers.

In some examples, the processor 301 may determine a set of neighboring interferers from the neighboring interferers in the list and perform the interference cancellation 721 only for the set of neighboring interferers. In some examples, the set may include a subset of the neighboring interferers in the list, which the subset may be determined based on their respective interference power values. For this purpose, the processor 301 may determine the subset based on an identification of strong interferers among the neighboring interferers in the list, which may be determined as they transmit their respective sensing signals interfering with the sensing signal transmitted by the radio access node 602.

For example, to identify the strong interferers, at block 710, the processor 301 may apply a threshold and sort mechanism, in which the processor 301 may determine the subset based on a threshold applied to the respective interference power values determined at block 709 of each neighboring interferer with the index i. The processor 301 may sort the respective interference power values of the neighboring interferers after performing block 709 for all the neighboring interferers from the highest interference power value to the lowest interference power value in a descending order, each interference power value is being the determined interference power value of the respective neighboring interferer and correspondingly obtain a sorted device list in which the neighboring interferers are sorted based on their respective determined interference power values in the descending order. The processor 301 may select only the neighboring interferers exceeding a predefined or predetermined peak power value. In some examples, the threshold may correspond to the predefined peak power value or the processor 301 may adaptively calculate the threshold based on the noise power. Accordingly, the processor 301 may obtain a list of strong interferers in a descending order. In some examples, the list of strong interferers may include the subset (e.g. only some of the neighboring interferers), or may include all the neighboring interferers, sorted in accordance with their interference power values.

With the list of strong interferers, the processor 301 may perform the interference cancellation portion 721. Following blocks 722-725 are performed for the processor 301 for each respective identifier of a respective neighboring interferer within the list of strong interferers in a loop, to obtain finally, after execution of the loop, the $Y_{out}$ 730. The interference cancellation portion may also receive the $Y_{in}$ to initialize an intermediate signal with the $Y_{in}$ in the first iteration. The processor 301 may, at block 722, calculate an elementwise division of the intermediate signal Y, that is the received reflected sensing symbols in the first iteration, by $S_{interf,i}$ 704 of the respective frequency domain sensing symbols of the neighboring interferer i in the strong interferer list, which may provide the frequency domain channel estimation of the neighboring interferer i during each OFDM symbol in the sensing frame. The processor 301 may calculate mean$_2$ (i.e. mean of the elementwise divided matrix) of the channel estimates across all the sensing symbols in the sensing frame to obtain an average channel estimation $\hat{H}_{interf,i}$, 724 of the respective neighboring interferer with the index i in the strong interferer list. Furthermore, the processor 301 may, at block 725, multiply the vector of average channel estimation $\hat{H}_{interf,i}$, 724 of the respective neighboring interferer with the index i in the strong interferer list with each column of $S_{interf,i}$ 704 of the respective frequency domain sensing symbols of the neighboring interferer i in the strong interferer list to obtain an estimated interference signal of the respective neighboring interferer with the index i in the strong interferer list. Furthermore, the processor 301 may, at block 722, subtract the obtained estimated interference signal of the respective neighboring interferer with the index i at block 725 the resulting intermediate values Y to be used for the next iteration. After performing the blocks 722-725, in which at each iteration determinations are made for a respective neighboring interferer with the index i in the strong interferer list starting from the neighboring interferer with the highest interference power value and ending at the neighboring interferer with the lowest interference power value, the resulting intermediate values (i.e. resulting intermediate signal) Y is outputted as $Y_{out}$ 730.

The processor 301 may further perform an IFFT 708 of the average channel estimation of the respective neighboring interferer with the index i to determine a time domain impulse response of the interference channel for the respective neighboring interferer with the index i. The processor 301 may further determine the maximum instantaneous power of interference signals of the respective neighboring interferer with the index i using a peak power detector 709.

FIG. 8 shows an illustrative example of another interference mitigation technique according to various aspects provided herein. In some examples, the processor 301 may implement an interference mitigation technique, for example as the block 422 referring to FIG. 4, which further describes $Y_{in}$ and $Y_{out}$. The interference mitigation technique may include an interference estimation portion 801, which is equivalent to the interference estimate portion 701 described in accordance with FIG. 7, and an interference cancellation portion 821, in which the processor 301 performs an interference cancellation. In this illustrative example, neighboring interferers may be exemplified as neighboring radio access nodes 601a-d. This exemplary technique may be similar to the technique described in accordance with FIG. 7 but with a time-domain thresholding of interference channel estimates to reduce the amount of noise injected during interference cancellation. This technique may be computationally more complex than the technique described in accordance with FIG. 7, but may result in more accurate interference cancellation.

Similar to what is described in accordance with FIG. 7, the interference cancellation portion 821 may receive the list of strong interferers in descending order from the interference estimation portion 801 (e.g. the interference estimation portion 701) and the $Y_{in}$ 806 to initialize an intermediate signal Y with the $Y_{in}$ in the first iteration. With the list of strong interferers, the processor 301 may perform the interference cancellation portion 821. Following blocks 822-827 are performed for the processor 301 for each respective identifier of a respective neighboring interferer within the list of strong interferers in a loop, to obtain finally, after execution of the loop, the $Y_{out}$. The processor 301 may, at block 722, calculate an elementwise division of the intermediate signal Y, that is the received reflected sensing symbols in the first iteration, by $S_{interf,i}$ of the respective frequency domain sensing symbols of the neighboring interferer i in the strong interferer list, which may provide the frequency domain channel estimation of the neighboring interferer i during each OFDM symbol in the sensing frame. The processor 301 may calculate $mean_2$ (i.e. mean of the elementwise divided matrix) of the channel estimates across all the sensing symbols in the sensing frame to obtain an average channel estimation of the respective neighboring interferer with the index i in the strong interferer list. Furthermore, the processor 301 may, at block 824, the processor may perform an IFFT to convert the average channel estimation of the respective neighboring interferer with the index i in the strong interferer list to a time domain channel impulse response (CIR).

The processor 301 may, at block 825, apply a thresholding to the time domain CIR of the respective neighboring interferer with the index i in the strong interferer list, in which the CIR samples that are below the designated threshold is set to zero, to obtain an updated CIR. The threshold may be predefined or predetermined based on the interference cancellation performance to eliminate the contribution of the noise and other interferers up to an extent that results in more accurate CIR. After thresholding, the processor 301 may, at block 826, apply an FFT to the updated CIR to convert back to an updated frequency domain average channel estimation of the respective neighboring interferer with the index i in the strong interferer list $\hat{H}_{interf,i}$. The processor 301 may, at block 827, multiply the vector of the updated average channel estimation $\hat{H}_{interf,i}$ of the respective neighboring interferer with the index i in the strong interferer list with each column of $S_{interf,i}$ of the respective frequency domain sensing symbols of the neighboring interferer i in the strong interferer list to obtain an estimated interference signal of the respective neighboring interferer with the index i in the strong interferer list. Furthermore, the processor 301 may, at block 822, subtract the obtained estimated interference signal of the respective neighboring interferer with the index i at block 827 the resulting intermediate values Y to be used for the next iteration. After performing the blocks 822-827, in which at each iteration determinations are made for a respective neighboring interferer with the index i in the strong interferer list starting from the neighboring interferer with the highest interference power value and ending at the neighboring interferer with the lowest interference power value, the resulting intermediate value Y is outputted as $Y_{out}$.

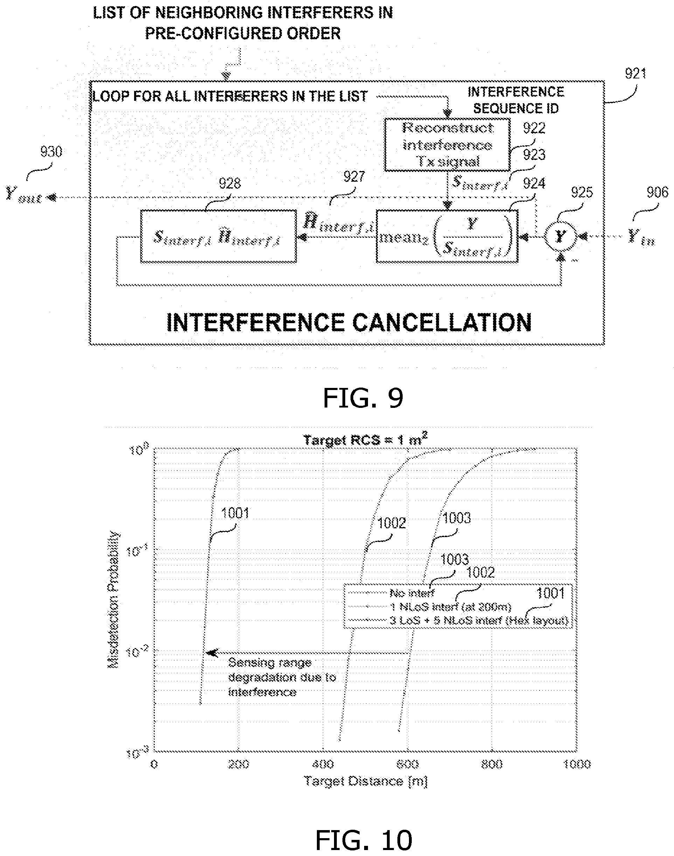

FIG. 9 shows an illustrative example of another interference mitigation technique according to various aspects provided herein. In some examples, the processor 301 may implement an interference mitigation technique, for example as the block 422 referring to FIG. 4, which further describes $Y_{in}$ and $Y_{out}$. The interference mitigation technique may not include an interference estimation portion as described herein, but may include an interference cancellation portion 821, in which the processor 301 estimates the interferences and performs an interference cancellation. In this illustrative example, neighboring interferers may be exemplified as neighboring radio access nodes 601a-d. This exemplary technique may be similar to other techniques described herein and may include successive interference cancellation in predefined order of interferers. This technique may be computationally less complex than the techniques described in accordance with FIGs. 7 and 8.

In this example, the processor 301 may determine a preconfigured ordered list of neighboring interferers.

Illustratively, the processor 301 may determine the preconfigured ordered list based on order of distances between the radio access node 602 and the neighboring radio access nodes 601-ad or a hierarchical ground of interferences based on expected level of interferences (e.g. at three interference levels, such as low, medium, high). If the preconfigured list of interferers matches with the actual interference powers in decreasing order (e.g. as described in accordance with FIG. 7), then this technique may provide optimal performance like the technique described in FIG. 7. However, if the actual order of interference powers does not match the order in the list of interferers, then slight degradation in interference cancellation performance may be observed.

Following blocks 922-928 are performed by the processor 301 for each respective identifier (i.e. index i being an integer between 1 to N, N being the total number of neighboring interferers in the list; e.g. N=4 for the neighboring radio access nodes 601a-d) of a respective neighboring interferer in the preconfigured list in a loop, to obtain finally, after execution of the loop, the $Y_{out}$ 930. The processor 301 may, at block 922, reconstruct the respective sensing signal transmitted by the respective neighboring interferer. The reconstruction may include generating the sensing signal sequence based on a random or pseudo-random sequence and the respective identifier to obtain frequency domain sensing symbols (e.g. OFDM symbols) $S_{interf,i}$ 923 transmitted by the respective neighboring interferer with the index i in a sensing frame. The interference cancellation portion 921 may also receive the $Y_{in}$ 906 to an intermediate signal Y with the $Y_{in}$ in the first iteration. The processor 301 may, at block 924, calculate an elementwise division of the intermediate signal Y, that is the received reflected sensing symbols in the first iteration, by $S_{interf,i}$ 923 of the respective frequency domain sensing symbols of the neighboring interferer i in the list, which may provide the frequency domain channel estimation of the neighboring interferer i during each OFDM symbol in the sensing frame. The processor 301 may calculate $mean_2$ (i.e. mean of the elementwise divided matrix) of the channel estimates across all the sensing symbols in the sensing frame to obtain an average channel estimation $\hat{H}_{interf,i}$ 927 of the respective neighboring interferer with the index i in the list. Furthermore, the processor 301 may, at block 928, multiply the vector of average channel estimation $\hat{H}_{interf,i}$ 927 of the respective neighboring interferer with the index i in the list with each column of $S_{interf,i}$ 923 of the respective frequency domain sensing symbols of the neighboring interferer i in the list to obtain an estimated interference signal of the respective neighboring interferer with the index i in the list. Furthermore, the processor 301 may, at block 925, subtract the obtained estimated interference signal of the respective neighboring interferer with the index i at block 928 the resulting intermediate values Y to be used for the next iteration. After performing the blocks 922-928, in which at each iteration determinations are made for a respective neighboring interferer with the index i in the list the resulting intermediate values Y is outputted as $Y_{out}$ 930.

FIG. 10 shows an example of a graph associated with a degradation of the detection performance. Consider an OFDM-radar sensing in interference-limited scenario. Here, the interfering radio access node as gNB is placed at a distance (200 m) from the radio access node subjected to the interference of the interfering radio access node, and the resulting interference power at the radio access node subject to the interference is modelled using 3GPP urban microcell (UMI) NLoS pathloss model. It is assumed that all the gNBs utilize code-domain multiplexing of sensing signals and overlapping time-frequency resources for transmitting sensing OFDM symbols, but different sequence IDs are used by the gNBs for orthogonality in code domain.

Simulation of the above scenario (1 NLoS interferer at 200 m distance) resulted in degradation of detection performance as shown. Since the interference power increases the noise floor at sensing receiver, the misdetection probability 1002 increases when compared to the noise-limited case 1003. As the number of interferes increases (full network scenario with hexagonal cell layout 1001), interference powers accumulate to increase the degradation. For example, in a hexagonal cell layout with 3 LOS and 4 NLOS interferers, significant performance degradation is observed as shown by 1001.

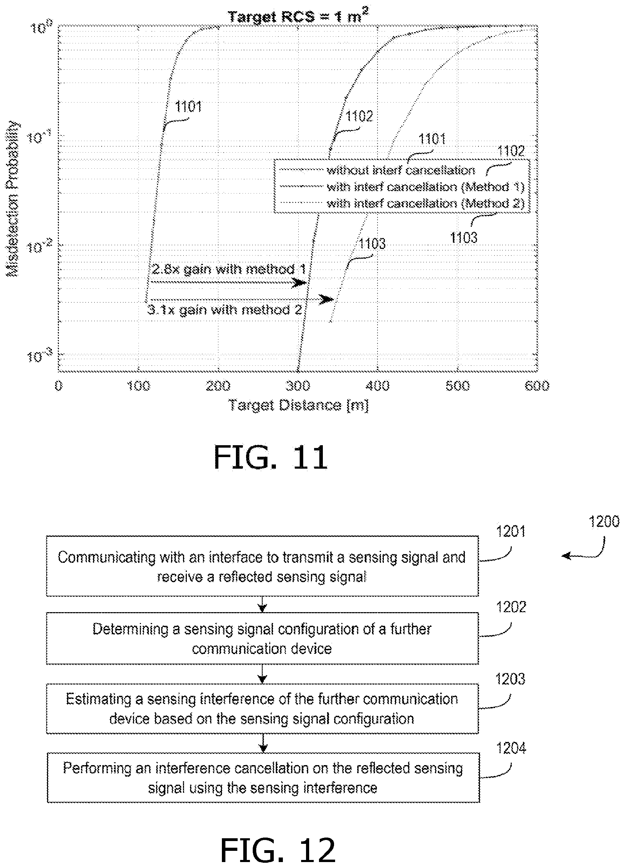

FIG. 11 shows an example of a graph associated with a degradation of the detection performance. The improvements in detection performance that can be achieved using proposed techniques in accordance with FIGs. 7 and 8 are shown. Here, the curve 1101 shows significantly degraded performance due to the interference caused by 3 LoS and 5 NLoS interferers in a hexagonal cell layout scenario. The results with interference cancellation methods demonstrate significant gains in detection performance. For example, at $3\times{10}^{-3}$ misdetection probability, proposed technique in accordance with FIG. 7 1102 shows about 2.8x improvement in the achievable sensing range, and proposed technique in accordance with FIG. 8 1103 shows about 3.1x improvement in the achievable sensing range.

FIG. 12 shows an example of a method. The method 1200 may include: communicating 1201 with an interface to transmit a sensing signal and receive a reflected sensing signal; determining 1202 a sensing signal configuration of a further communication device; estimating 1203 a sensing interference of the further communication device based on the sensing signal configuration; and performing 1204 an interference cancellation on the reflected sensing signal using the sensing interference.. A non-transitory computer readable medium may include instructions which, if executed by a processor, cause the processor to perform the method 1200.

The following examples pertain to further aspects of this disclosure.

In example 1, the subject matter includes an apparatus of a communication device, the apparatus including: an interface configured to transmit a sensing signal and receive a reflected sensing signal; and a processor configured to:

determine a sensing signal configuration of a further communication device; estimate a sensing interference of the further communication device based on the sensing signal configuration; and perform an interference cancellation on the reflected sensing signal using the sensing interference.

In example 2, the subject matter of example 1, wherein the processor is further configured to obtain an output signal from the reflected signal based on the interference cancellation; wherein the output signal includes information representative of an object; and wherein the processor is further configured to analyze the output signal to determine at least one of an identity of the object, a location of the object, a range of the object, a velocity of the object, or an angle of the object.

In example 3, the subject matter of example 1 or example 2, wherein the processor is further configured to estimate the sensing interference based on an identifier associated with the further communication device, and wherein the identifier indicates a further sensing signal transmitted by the further communication device.

In example 4, the subject matter of example 3, wherein the processor is further configured to receive the sensing signal configuration to obtain the identifier; and wherein the sensing signal configuration is received from the further communication device or another network entity within a communication network.

In example 5, the subject matter of example 3 or example 4, wherein the processor is further configured to generate a sensing signal sequence associated with the further communication device based on the identifier and a reference random or pseudo random sequence to obtain the sensing interference.

In example 6, the subject matter of any one of examples 1 to 5, wherein the processor is configured to determine a respective sensing signal configuration of each further communication device of a plurality of further communication devices including the further communication device, wherein the respective sensing configuration of the further communication device is the sensing signal configuration; and wherein, for each further communication device of the plurality of further communication devices, the processor is configured to estimate a respective sensing interference, wherein the respective sensing interference of the further communication device is the sensing interference.

In example 7, the subject matter of example 6, wherein the processor is configured to estimate the respective sensing interference for each further communication device based on a respective identifier associated with the respective further communication device.

In example 8, the subject matter of example 6 or example 7, wherein the processor is further configured to determine a set of further communication devices from the plurality of further communication devices; and wherein the interference cancellation on the reflected sensing signal includes using respective sensing interferences of the set of further communication devices.

In example 9, the subject matter of example 8, wherein the set of further communication devices includes a subset of the plurality of further communication devices determined based on their respective interference power values.

In example 10, the subject matter of example 9, wherein the processor is further configured to determine the subset of the plurality of further communication devices based on an identification of strong interferers among the plurality of further communication devices, and wherein the strong interferers are determined to transmit further sensing signals interfering with the sensing signal of the communication device.

In example 11, the subject matter of example 9 or example 10, wherein the processor is further configured to determine the subset of the plurality of further communication devices based on a threshold applied to the respective interference power values determined for each further communication device.

In example 12, the subject matter of any one of examples 6 to 11, wherein the processor is further configured to sort the plurality of further communication devices or the subset of the plurality of further communication devices to obtain a sorted device list in an order based on their respective interference power values, such that the plurality of further communication devices are sorted from a highest interference power value to a lowest interference power value.

In example 13, the subject matter of any one of examples 6 to 11, wherein the processor is further configured to sort the plurality of further communication devices or the subset of the plurality of further communication devices to obtain a sorted device list in an order based on sorting information stored in a memory.

In example 14, the subject matter of example 12 or example 13, wherein the processor is further configured to: iteratively subtract, for each further communication device of the sorted device list, the respective sensing interference from an intermediate signal to obtain an updated intermediate signal, and set the intermediate signal as the updated intermediate signal for a subsequent iteration; and wherein the intermediate signal is initialized as the reflected sensing signal.

In example 15, the subject matter of any one of examples 12 to 14, wherein the processor is further configured to: calculate a respective time-domain channel impulse response of each further communication device; apply a thresholding to values of the respective time-domain channel impulse response of each further communication device to obtain a respective updated time-domain channel impulse response; convert the respective updated time-domain channel impulse response to calculate the intermediate signal.

In example 16, the subject matter of any one of examples 1 to 15, wherein the processor is further configured to determine at least one of range or doppler information based on an output signal obtained with the interference cancellation.

In example 17, the subject matter of any one of examples 1 to 16, wherein a sensing interference cancelling operation includes at least one of a determination of the sensing signal configuration of the further communication device, an estimation of the sensing interference of the further communication device based on the sensing signal configuration, or a performance of the interference cancellation on the reflected sensing signal using the sensing interference; wherein the processor is further configured to determine a result representing whether a received signal from the interface is the reflected sensing signal or a communication signal; and wherein the processor is further configured to initiate the sensing interference cancelling operation based on the result.

In example 18, the subject matter of any one of examples 1 to 17, wherein the communication device is a base station of a mobile wireless communication network and wherein the further communication device is a neighboring base station of the mobile wireless communication network.

In example 19, the subject matter includes a method including: communicating with an interface to transmit a sensing signal and receive a reflected sensing signal; determining a sensing signal configuration of a further communication device; estimating a sensing interference of the further communication device based on the sensing signal configuration; and performing an interference cancellation on the reflected sensing signal using the sensing interference.

In example 20, the subject matter of example 19, may further include: obtaining an output signal from the reflected signal based on the interference cancellation, wherein the output signal includes information representative of an object; and analyzing the output signal to determine at least one of an identity of the object, a location of the object, a range of the object, a velocity of the object, or an angle of the object.

In example 21, The apparatus of example 19 or example 20, may further include: estimating the sensing interference based on an identifier associated with the further communication device, and wherein the identifier indicates a further sensing signal transmitted by the further communication device.

In example 22, the subject matter of example 21, may further include decoding a received communication signal to obtain the identifier; and wherein the received communication signal is received from the further communication device or another network entity within a communication network.

In example 23, the subject matter of example 21 or example 22, may further include: generating a sensing signal sequence associated with the further communication device based on the identifier and a reference random or pseudo random sequence to obtain the sensing interference.

In example 24, the subject matter of any one of examples 19 to 23, wherein may further include: determining a respective sensing signal configuration of each further communication device of a plurality of further communication devices including the further communication device, wherein the respective sensing configuration of the further communication device is the sensing signal configuration; and wherein, for each further communication device of the plurality of further communication devices, the method includes estimating a respective sensing interference, wherein the respective sensing interference of the further communication device is the sensing interference.

In example 25, the subject matter of example 24, may further include estimating the respective sensing interference for each further communication device based on a respective identifier associated with the respective further communication device.

In example 26, the subject matter of example 24 or example 25, may further include: determining a set of further communication devices from the plurality of further communication devices; and wherein the interference cancellation on the reflected sensing signal includes using respective sensing interferences of the set of further communication devices.

In example 27, the subject matter of example 26, wherein the set of further communication devices includes a subset of the plurality of further communication devices determined based on their respective interference power values.

In example 28, the subject matter of example 27, may further include determining the subset of the plurality of further communication devices based on an identification of strong interferers among the plurality of further communication devices, and wherein the strong interferers are determined to transmit further sensing signals interfering with the sensing signal of the communication device.

In example 29, the subject matter of example 27 or example 28, may further include: determining the subset of the plurality of further communication devices based on a threshold applied to the respective interference power values determined for each further communication device.

In example 30, the subject matter of any one of examples 24 to 29, may further include sorting the plurality of further communication devices or the subset of the plurality of further communication devices to obtain a sorted device list in an order based on their respective interference power values, such that the plurality of further communication devices are sorted from a highest interference power value to a lowest interference power value.

In example 31, the subject matter of any one of examples 24 to 30, may further include sorting the plurality of further communication devices or the subset of the plurality of further communication devices to obtain a sorted device list in an order based on sorting information stored in a memory.

In example 32, the subject matter of example 30 or example 31, may further include: iteratively subtract, for each further communication device of the sorted device list, the respective sensing interference from an intermediate signal to obtain an updated intermediate signal, and set the intermediate signal as the updated intermediate signal for a subsequent iteration; and wherein the intermediate signal is initialized as the reflected sensing signal.

In example 33, the subject matter of any one of examples 31 to 32, may further include: calculating a respective time-domain channel impulse response of each further communication device; applying a thresholding to values of the respective time-domain channel impulse response of each further communication device to obtain a respective updated time-domain channel impulse response; converting the respective updated time-domain channel impulse response to calculate the intermediate signal.

In example 34, the subject matter of any one of examples 19 to 33, may further include determining at least one of range or doppler information based on an output signal obtained with the interference cancellation.

In example 35, the subject matter of any one of examples 19 to 34, wherein a sensing interference cancelling operation includes at least one of a determination of the sensing signal configuration of the further communication device, an estimation of the sensing interference of the further communication device based on the sensing signal configuration, or a performance of the interference cancellation on the reflected sensing signal using the sensing interference; wherein the method further includes: determining a result representing whether a received signal from the interface is the reflected sensing signal or a communication signal; and initiating the sensing interference cancelling operation based on the result.

In example 36, the subject matter of any one of examples 19 to 35, wherein the communication device is a base station of a mobile wireless communication network and wherein the further communication device is a neighboring base station of the mobile wireless communication network.

In example 37, the subject matter includes a non-transitory computer-readable medium including instructions which, if executed by a processor, cause the processor to: communicate with an interface to transmit a sensing signal and to receive a reflected sensing signal; determine a sensing signal configuration of a further communication device; estimate a sensing interference of the further communication device based on the sensing signal configuration; and perform an interference cancellation on the reflected sensing signal using the sensing interference.

In example 38, the subject matter of example 37, wherein the instructions further cause the processor to obtain an output signal from the reflected signal based on the interference cancellation; wherein the output signal includes information representative of an object; and wherein the instructions further cause the processor to analyze the output signal to determine at least one of an identity of the object, a location of the object, a range of the object, a velocity of the object, or an angle of the object.

In example 39, the subject matter of example 37 or example 38, wherein the instructions further cause the processor to estimate the sensing interference based on an identifier associated with the further communication device, and wherein the identifier indicates a further sensing signal transmitted by the further communication device.

In example 40, the subject matter of example 39, wherein the instructions further cause the processor to decode a received communication signal to obtain the identifier; and wherein the received communication signal is received from the further communication device or another network entity within a communication network.

In example 41, the subject matter of example 39 or example 40, wherein the instructions further cause the processor to generate a sensing signal sequence associated with the further communication device based on the identifier and a reference random or pseudo random sequence to obtain the sensing interference.

In example 42, the subject matter of any one of examples 37 to 41, wherein the processor is configured to determine a respective sensing signal configuration of each further communication device of a plurality of further communication devices including the further communication device, wherein the respective sensing configuration of the further communication device is the sensing signal configuration; and wherein, for each further communication device of the plurality of further communication devices, the processor is configured to estimate a respective sensing interference, wherein the respective sensing interference of the further communication device is the sensing interference.

In example 43, the subject matter of example 42, wherein the processor is configured to estimate the respective sensing interference for each further communication device based on a respective identifier associated with the respective further communication device.

In example 44, the subject matter of example 42 or example 43, wherein the instructions further cause the processor to determine a set of further communication devices from the plurality of further communication devices; and wherein the interference cancellation on the reflected sensing signal includes using respective sensing interferences of the set of further communication devices.

In example 45, the subject matter of example 44, wherein the set of further communication devices includes a subset of the plurality of further communication devices determined based on their respective interference power values.

In example 46, the subject matter of example 45, wherein the instructions further cause the processor to determine the subset of the plurality of further communication devices based on an identification of strong interferers among the plurality of further communication devices, and wherein the strong interferers are determined to transmit further sensing signals interfering with the sensing signal of the communication device.

In example 47, the subject matter of example 45 or example 46, wherein the instructions further cause the processor to determine the subset of the plurality of further communication devices based on a threshold applied to the respective interference power values determined for each further communication device.

In example 48, the subject matter of any one of examples 42 to 47, wherein the instructions further cause the processor to sort the plurality of further communication devices or the subset of the plurality of further communication devices to obtain a sorted device list in an order based on their respective interference power values, such that the plurality of further communication devices are sorted from a highest interference power value to a lowest interference power value.

In example 49, the subject matter of any one of examples 42 to 47, wherein the instructions further cause the processor to sort the plurality of further communication devices or the subset of the plurality of further communication devices to obtain a sorted device list in an order based on sorting information stored in a memory.

In example 50, the subject matter of example 48 or example 49, wherein the instructions further cause the processor to: iteratively subtract, for each further communication device of the sorted device list, the respective sensing interference from an intermediate signal to obtain an updated intermediate signal, and set the intermediate signal as the updated intermediate signal for a subsequent iteration; and wherein the intermediate signal is initialized as the reflected sensing signal.

In example 51, the subject matter of any one of examples 37 to 50, wherein the interference cancellation includes a successive interference cancellation technique.

In example 52, the subject matter of any one of examples 37 to 51, wherein the instructions further cause the processor to determine at least one of range or doppler information based on an output signal obtained with the interference cancellation.

In example 53, the subject matter of any one of examples 37 to 52, wherein a sensing interference cancelling operation includes at least one of a determination of the sensing signal configuration of the further communication device, an estimation of the sensing interference of the further communication device based on the sensing signal configuration, or a performance of the interference cancellation on the reflected sensing signal using the sensing interference; wherein the instructions further cause the processor to determine a result representing whether a received signal from the interface is the reflected sensing signal or a communication signal; and wherein the instructions further cause the processor to initiate the sensing interference cancelling operation based on the result.

In example 54, the subject matter of any one of examples 37 to 53, wherein the communication device is a base station of a mobile wireless communication network and wherein the further communication device is a neighboring base station of the mobile wireless communication network. The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The terminology in accordance with open-RAN (O-RAN) specifications is to be considered for Radio Units (RUs), Distributed Units (DUs) and Centralized Units (CUs). Inherently, a base station is considered to be disaggregated into such units in accordance with layers of a corresponding protocol stack into these logical nodes, which all of them can be implemented by the same device or multiple devices in which each device may be deployed with one of these units.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

**Claims**

1. An apparatus of a communication device, the apparatus comprising:

    an interface configured to transmit a sensing signal and receive a reflected sensing signal; and
    a processor configured to:

        determine a sensing signal configuration of a further communication device;
        estimate a sensing interference of the further communication device based on the sensing signal configuration; and
        perform an interference cancellation on the reflected sensing signal using the sensing interference.

2. The apparatus of claim **1,**

    wherein the processor is further configured to obtain an output signal from the reflected signal based on the interference cancellation;
    wherein the output signal comprises information representative of an object; and wherein the processor is further configured to analyze the output signal to determine at least one of an identity of the object, a location of the object, a range of the object, a velocity of the object, or an angle of the object.

3. The apparatus of any one of claims 1 or 2, wherein the processor is further configured to estimate the sensing interference based on an identifier associated with the further communication device, and

    wherein the identifier indicates a further sensing signal transmitted by the further communication device; preferably wherein the processor is further configured to receive the sensing signal configuration to obtain the identifier; and
    wherein the sensing signal configuration is received from the further communication device or another network entity within a communication network.

4. The apparatus of claim 3, wherein the processor is further configured to generate a sensing signal sequence associated with the further communication device based on the identifier and a reference random or pseudo random sequence to obtain the sensing interference.

5. The apparatus of any one of claims 1 to 4, wherein the processor is configured to determine a respective sensing signal configuration of each further communication device of a plurality of further communication devices including the further communication device, wherein the respective sensing configuration of the further communication device is the sensing signal configuration; and

    wherein, for each further communication device of the plurality of further communication devices, the processor is configured to estimate a respective sensing interference, wherein the respective sensing interference of the further communication device is the sensing interference;
    preferably wherein the processor is configured to estimate the respective sensing interference for each further communication device based on a respective identifier associated with the respective further communication device.

6. The apparatus of claim 5, wherein the processor is further configured to determine a set of further communication devices from the plurality of further communication devices; and
wherein the interference cancellation on the reflected sensing signal comprises using respective sensing interferences of the set of further communication devices.

7. The apparatus of claim 6, wherein the set of further communication devices comprises a subset of the plurality of further communication devices determined based on their respective interference power values.

8. The apparatus of claim 7, wherein the processor is further configured to determine the subset of the plurality of further communication devices based on an identification of strong interferers among the plurality of further communication devices, and

    wherein the strong interferers are determined to transmit further sensing signals interfering with the sensing signal of the communication device; and/or
    wherein the processor is further configured to determine the subset of the plurality of further communication devices based on a threshold applied to the respective interference power values determined for each further communication device.

9. The apparatus of any one of claim 5 to 8, wherein the processor is further configured to sort the plurality of further communication devices or the subset of the plurality of further communication devices to obtain a sorted device list in an order based on their respective interference power values, such that the plurality of further communication devices are sorted from a highest interference power value to a lowest interference power value; and/or
wherein the processor is further configured to sort the plurality of further communication devices or the subset of the plurality of further communication devices to obtain a sorted device list in an order based on sorting information stored in a memory.

10. The apparatus of claim 9, wherein the processor is further configured to:

    iteratively subtract, for each further communication device of the sorted device list, the respective sensing interference from an intermediate signal to obtain an updated intermediate signal, and set the intermediate signal as the updated intermediate signal for a subsequent iteration; and
    wherein the intermediate signal is initialized as the reflected sensing signal; and/or
    wherein the processor is further configured to:

calculate a respective time-domain channel impulse response of each further communication device;
apply a thresholding to values of the respective time-domain channel impulse response of each further communication device to obtain a respective updated time-domain channel impulse response;
convert the respective updated time-domain channel impulse response to calculate the intermediate signal.

11. The apparatus of any one of claims 1 to 10, wherein the processor is further configured to determine at least one of range or doppler information based on an output signal obtained with the interference cancellation.

12. The apparatus of any one of claims 1 to 11, wherein a sensing interference cancelling operation comprises at least one of a determination of the sensing signal configuration of the further communication device, an estimation of the sensing interference of the further communication device based on the sensing signal configuration, or a performance of the interference cancellation on the reflected sensing signal using the sensing interference;

wherein the processor is further configured to determine a result representing whether a received signal from the interface is the reflected sensing signal or a communication signal; and
wherein the processor is further configured to initiate the sensing interference cancelling operation based on the result.

13. The apparatus of any one of claims 1 to 12, wherein the communication device is a base station of a mobile wireless communication network and wherein the further communication device is a neighboring base station of the mobile wireless communication network.

14. A non-transitory computer-readable medium comprising instructions which, if executed by a processor, cause the processor to:

communicate with an interface to transmit a sensing signal and to receive a reflected sensing signal;
determine a sensing signal configuration of a further communication device;
estimate a sensing interference of the further communication device based on the sensing signal configuration; and
perform an interference cancellation on the reflected sensing signal using the sensing interference.

15. The non-transitory computer-readable medium of claim 14, wherein the instructions further cause the processor to obtain an output signal from the reflected signal based on the interference cancellation;
wherein the output signal comprises information representative of an object; and wherein the instructions further cause the processor to analyze the output signal to determine at least one of an identity of the object, a location of the object, a range of the object, a velocity of the object, or an angle of the object.

100

110

102

120

104

## FIG. 1

200

202

204

206

208

210

212

TX

RX

DSP

Protocol processor

Application processor

Memory

214

## FIG. 2

300

| PROCESSOR 301 | COMMUNICATION INTERFACE 303 |
| | MEMORY 302 |

## FIG. 3

400

SENSING SIGNAL CONFIGURATION → | SENSING SIGNAL SEQUENCE 411 | → | QPSK MODULATION 412 | → | OFDM SYMBOL MAPPING 413 | → | IFFT / CP 414 |

SENSING SIGNAL ↓

| RADIO CHANNEL 430 |

REFLECTED SENSING SIGNAL ↓

| CFAR DETECTION 426 | ← | RANGE IFFT 425 | ← | DOPPLER FFT 424 | ← | SYMBOL DEMODULATION 423 | $Y_{out}$ ← | INTERFER. MITIGATION 422 | $Y_{in}$ ← | CP REMOVAL / FFT 421 |

## FIG. 4

FIG. 5A

FIG. 5B

FIG. 5C

FIG. 6

# INTERFERENCE ESTIMATION

**FIG. 7**

**FIG. 8**

LIST OF NEIGHBORING INTERFERERS IN
PRE-CONFIGURED ORDER

FIG. 9

FIG. 10

FIG. 11

FIG. 12

Europäisches
Patentamt

European
Patent Office

Office européen
des brevets

# EUROPEAN SEARCH REPORT

**Application Number**

EP 25 18 7872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILD THORSTEN ET AL: "Joint Design of Communication and Sensing for Beyond 5G and 6G Systems", IEEE ACCESS, IEEE, USA, vol. 9, 15 February 2021 (2021-02-15), pages 30845-30857, XP011840202, DOI: 10.1109/ACCESS.2021.3059488 [retrieved on 2021-02-23] | 1-9, 11-15 | INV. G01S7/00 G01S7/02 G01S7/292 G01S13/10 H04W4/02 |
| A | * page 30849, left-hand column, line 18 - line 38 * <br> * page 30851, left-hand column, line 33 - right-hand column, line 3 * <br> * page 30853, left-hand column, line 31 - right-hand column, line 17 * <br> * figures 1-8 * | 10 | |
| A | TAHA ABDELRAHMAN ET AL: "Millimeter Wave MIMO-Based Depth Maps for Wireless Virtual and Augmented Reality", IEEE ACCESS, IEEE, USA, vol. 9, 22 March 2021 (2021-03-22), pages 48341-48363, XP011847038, DOI: 10.1109/ACCESS.2021.3067839 [retrieved on 2021-03-30] <br> * algorithm 1 * <br> * page 48352, right-hand column, line 25 - line 49 * <br> * figures 1-24 * | 1-15 | |

**TECHNICAL FIELDS SEARCHED (IPC)**

G01S
H04W

The present search report has been drawn up for all claims

| Place of search | Date of completion of the search | Examiner |
|---|---|---|
| Munich | 8 December 2025 | Köppe, Maro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)